# EUROPEAN PATENT SPECIFICATION

(11) **EP 3 643 600 B1**
(45) Date of publication and mention of the grant of the patent: **20.07.2022**
(21) Application number: 19204135.8
(22) Date of filing: 18.10.2019
(51) Int. Cl.: B64C 1/10, B64C 1/06, B64C 1/12

(54) **BULKHEAD JOINT ASSEMBLY**
DRUCKSCHOTTVERBINDUNGSANORDNUNG
ENSEMBLE DE JOINT DE CLOISON

(30) Priority: 22.10.2018 US 201816166785
(43) Date of publication of application: 29.04.2020
(73) Proprietor: The Boeing Company, Chicago, IL 60606-2016 (US)
(72) Inventor: JOSEPH, Joel, CHCAGO, IL 60606-2016 (US); DIEP, Paul, CHCAGO, IL 60606-2016 (US); DOPKER, Bernhard, CHCAGO, IL 60606-2016 (US); BUCKLEY, Mark J., CHCAGO, IL 60606-2016 (US)
(74) Representative: Plasseraud IP

(56) References cited:
- WO-A2-2010/003818
- US-A- 5 518 208
- US-A1- 2010 243 806
- US-A1- 2012 153 082

## Description

Embodiments of the present disclosure generally relate to an aircraft fuselage, and, more particularly, to a bulk head of a fuselage.

Fuselages are the main body of an aircraft. Within the fuselage a bulkhead is provided to couple to the horizontal stabilizer of the aircraft and to transfer load from the horizontal stabilizer, through the bulkhead and to structural components of the fuselage.

Great care is taken to ensure that the bulkhead is properly installed and transfers forces though the fuselage components without damaging the fuselage. A fuselage includes numerous sections. With relation to the bulkhead, the sections surrounding the bulkhead are considered an aft section and forward section, with the bulkhead spanning both sections. A bulkhead joint assembly couples and secures these components of the fuselage to facilitate the transfer of force from the bulkhead to structural elements of the aft section and forward section.

A known example of a bulkhead joint assembly includes opposing bulkhead attaching break ring chords of differing sizes that are secured on opposite sides of the bulkhead. In one example, bathtub fittings are aligned and placed against the chords on opposite sides of the bulkhead and secure to a corresponding aft section and forward section of a fuselage to form a tension joint between the bathtub fittings to resist movement of the bulkhead.

However, such a tension-based bulkhead joint assembly is inefficient in transferring forces and requires an intensive installation process. Additionally, such a bulkhead joint assembly of a fuselage includes numerous components that need to be spliced, which also leads to difficulties and complexity during manufacturing. To handle bulkhead forces, numerous components include metal such as aluminum that may corrode, for example. Such metals are also expensive, add manufacturing process such as deburring, and require higher levels of coordinated fit-up processes for final installation, and in general are difficult to work with during installation. Additionally, often to reduce corrosive effects on such metal, corrosive resistant sealants are utilized further increasing costs.

US2010/0243806 is about an aircraft pressure bulkhead assembly structure. WO2010/003818 is about a method for installing a dome shaped pressure bulkhead in a rear section of an aircraft,

US2012//0153082 is about splice and associated method for joining fuselage sections.

US5,518,208 is about an optimum aircraft body frame to body skin shear the installation pattern for body skin/stringer circumferential splices.

A need exists for a bulkhead joint assembly for a fuselage that couples to the interior of the fuselage while efficiently transferring forces on the bulkhead to the other components of the fuselage. Further, a need exists to minimize effects of corrosion on the fuselage and to have a bulkhead joint assembly design that minimizes spliced components, simplifies manufacturing processes, and reduces cost. In addition, a need exists for a simplified bulkhead joint to reduce cost and complexity associated with installation of a bulkhead assembly.

With those needs in mind, the present disclosure provides a bulkhead joint assembly according to independent claim 1. Further embodiments are provided in dependent claims 2-11. Furthermore, a fuselage comprising a bulkhead joint assembly according to independent claim 1 is provided in dependent claims 12 to 15.

### BRIEF DESCRIPTION OF THE DRAWINGS

Figure 1 is a partial side plan view of a fuselage according to an embodiment of the present disclosure.
Figure 2 is a partial exploded perspective view of a fuselage according to an embodiment of the present disclosure.
Figure 3 is a forward side perspective view of a bulk head joint assembly according to an embodiment of the present disclosure.
Figure 4 is an aft side perspective view of a bulk head joint assembly according to an embodiment of the present disclosure.
Figure 5 is a side sectional view of a bulk head joint assembly according to an embodiment of the present disclosure.
Figure 6 is a partial side section view of a bulkhead joint assembly, according to an embodiment of the present disclosure.
Figure 7 is a side perspective view of a strap section of a bulk head joint assembly, according to an embodiment of the present disclosure.
Figure 8 is a side perspective view of a stringer end fitting of a bulk head joint assembly, according to an embodiment of the present disclosure.
Figure 9 is a side perspective view of a chord of a bulk head joint assembly, according to an embodiment of the present disclosure.
Figure 10 is a side perspective view of a T-shaped chord of a bulk head joint assembly, according to an embodiment of the present disclosure.

### DETAILED DESCRIPTION OF THE INVENTION

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition may include additional elements not having that condition.

Certain embodiments of the present disclosure provide a bulk head joint assembly that includes strap sections configured to be tapered and extend under the bulk head and to receive stringer end fittings on both the forward side of the bulk head and the aft side of the bulk head. The bulk head joint assembly also includes a chord member that secures to and extends along the bulk head and also secures to and extends along the strap section. The chord by being generally positioned between the bulk head and strap section receives force transferred from the bulk head and transfers this force to the strap section as a shear force.

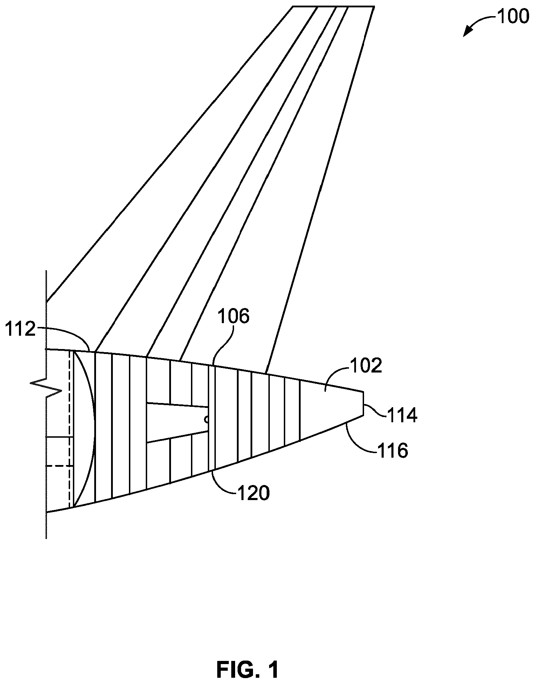

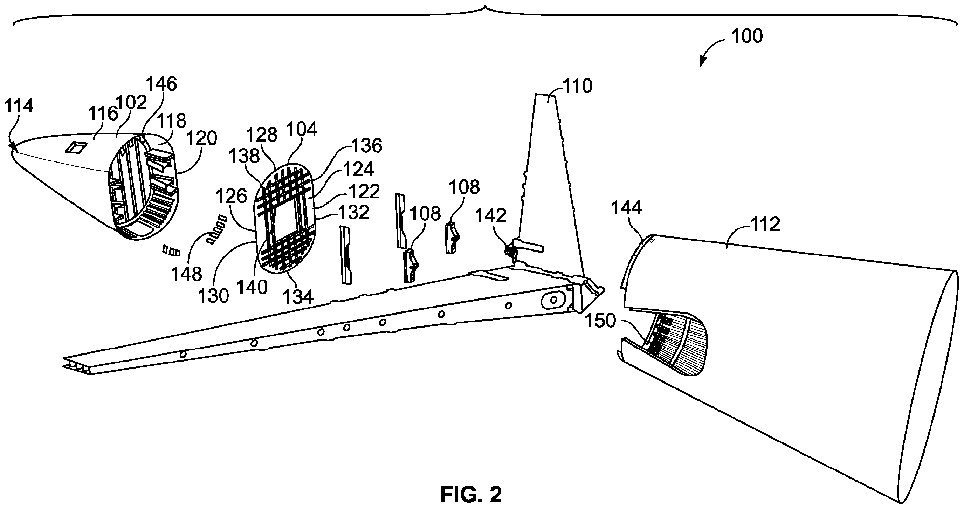

Figure 1 illustrates a partial side view of a fuselage 100 of an aircraft. Figure 2 illustrates a partial exploded perspective view of the fuselage 100. As illustrated in Figures 1 and 2, the fuselage 100 includes an aft section 102, a bulkhead 104 (Figure 2), bulkhead joint 106 (Figure 1), pivot fittings 108 (Figure 2), a horizontal stabilizer 110, and a forward section 112.

The aft section 102 of the fuselage includes the end point 114 of the aircraft and includes a housing 116, or skin, with an interior, or interior chamber 118 (Figure 2) configured to receive the bulkhead 104. The housing 116 also includes a periphery 120 that receives the forward section 112 of the fuselage.

The bulkhead 104 includes a web body 122 that includes a forward side 124, an aft side 126, a crown periphery 128, first side periphery 130, second side periphery 132, and keel periphery 134. On the forward side 124 the web body 122 includes a plurality of horizontal support members 136 and vertical support members 138 that surround a bulkhead opening 140 that in one example is generally rectangular in shape. The horizontal support members 136 and vertical support members 138 interconnect with one another to generally form a cross hatched pattern around the bulkhead opening 140. In this manner, the bulkhead 104 is configured to receive and absorb force from the horizontal stabilizer 110 via the pivot fittings 108 secured to the web body 122. While the bulkhead 104 of this exemplary embodiment includes horizontal support members 136 and vertical support members 138 that are generally cross hatched in relation to one another, in other embodiments the support member positioning and shapes are utilized on the web body 122 to provide structural support for the bulkhead 104. Similarly, in other embodiments, only horizontal support members 136 are on the forward side 124 or aft side 126. In another embodiment, only vertical support members 138 are on the forward side 124 or aft side 126.

The pivot fittings 108 secure to the forward side 124 of the web body 122 and pivotably engage the horizontal stabilizer 110. In this manner the horizontal stabilizer 110 is able to pivot in relation to the aft section 102 and forward section 112 of the fuselage 100 for operation of the aircraft.

The horizontal stabilizer 110 includes pivot pins 142 that pivotably connect to the pivot fittings 108. This connection allows pivoting movement between the horizontal stabilizer 110 and aft section 102. The horizontal stabilizer 110 places load on the bulkhead 104 that the bulkhead must absorb and transfer to the rest of the fuselage structure.

The forward section 112 is configured to matingly receive the horizontal stabilizer 110 to allow movement of the horizontal stabilizer 110 relative to the forward section 112. The forward section 112 also has a periphery 144 that is configured to receive the periphery 120 of the aft section 102.

Aft crown stringer end fittings 146 and aft keel stringer end fittings 148 are also provided for coupling the aft section 102 to the bulkhead 104. Similarly, forward keel stringer end fittings 150 are also provided with forward crown stringer end fittings (not shown) to couple the forward section 112 to the bulkhead 104.

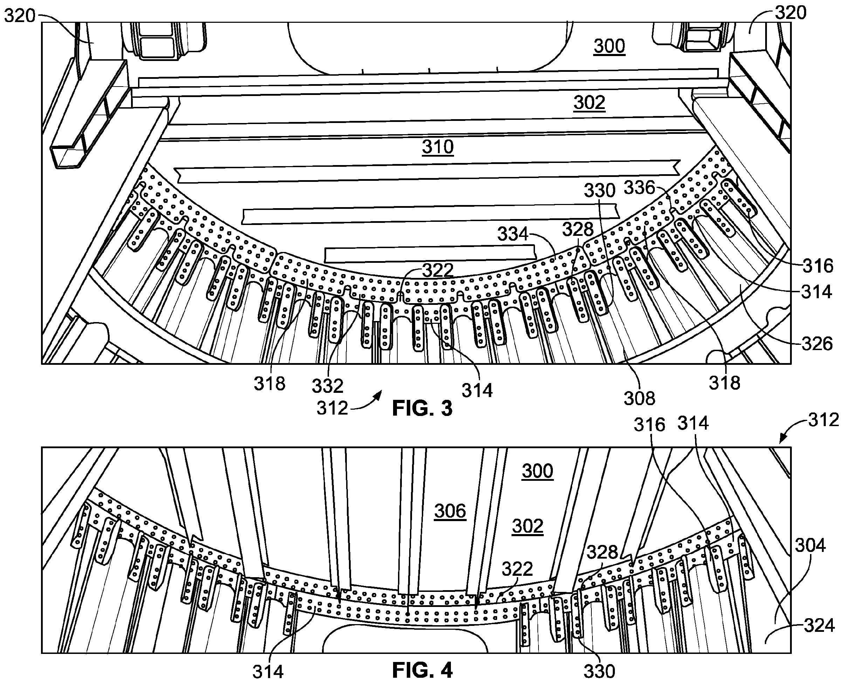

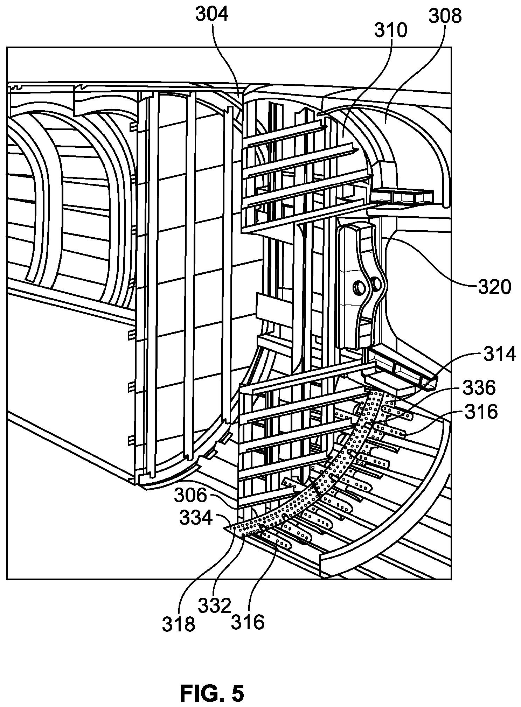

Figure 3 illustrates a partial view of a bulkhead 300 including a web body 302 disposed within the forward section 308 viewed from within the forward section 308 such that a forward side 310 of the web body 302 is illustrated. Figure 4 illustrates a partial view of the bulkhead 300 including the web body 302 within an aft section 304 such that an aft side 306 of the web body 302 is illustrated. Figure 5 illustrates a partial perspective view of the aft section 304 and forward section 308 and the web body 302 of the bulkhead 300 removed. Figures 3-5 collectively illustrate a bulkhead joint assembly 312. While Figures 3-5 all illustrate a keel or bottom section of the bulkhead 300, the bulkhead joint assembly 312 may similarly be provided on the crown, or top section of the bulkhead 300 in the same manner as illustrated. In one embodiment the bulkhead 300 is the bulkhead 104 of Figures 1-2, aft section 304 is aft section 102 of Figures 1-2, and forward section 308 is forward section 112 of Figures 1-2.

As illustrated in Figure 5, the bulkhead joint assembly 312 couples and secures the aft section 304 and forward section 308 and is configured to also couple and secure the aft section 304 and the forward section 308 to the bulkhead 300. The bulkhead joint assembly 312 includes strap sections 314, stringer end fittings 316, chord, or chord sections 318, and T-shaped chord sections 320 (Figures 3 and 5). The bulkhead joint assembly 312 in general is secured around a bulkhead periphery 322.

The strap sections 314 extend from an aft side 324 of the bulkhead 300 that is secured to the aft section 304 to a forward side 326 of the bulkhead 300 that is secured to the forward section 308. Specifically, each strap section 314 is generally arcuate in shape to matingly engage the both the aft section 304 and forward section 308. Each strap section 314 additionally extends underneath the bulk head 300. In one example the strap sections 314 are secured to the aft section 304 and forward section 308 by fasteners. In other embodiments rivets, bolts, screws, bonds, welds, other fasteners, or the like are utilized. While illustrated in the exemplary embodiment as multiple sections, the strap sections 314 may be of one-piece construction depending on manufacturing requirements. In one example splice straps are provided to secure to the bulkhead 300 or a corresponding chord section 318 to provide additional strength to the bulkhead joint assembly 312. In one embodiment the strap sections 314 are made from a composite fiber reinforced plastic (CFRP). By being made from CFRP, corrosion of the joint assembly 312 is minimized while manufacturing speed is increased because manufacturing steps including drilling, disassembly, and deburring of metal components, such as bathtub fittings, is eliminated.

The stringer end fittings 316 are positioned in spaced relation to one another along the bulkhead periphery 322 of the bulkhead 300 on both an aft side 324 and forward side 326 of the bulkhead 300. The stringer end fittings 316 each extend from a strap end 328 to a fuselage section end 330. At the strap end 328, the stringer end fittings 316 are secured to the corresponding strap section 314, while at the fuselage section end 330 the stringer end fittings 316 are secured to stringers of either the aft section 304 or the forward section 308. The stringer end fittings 316 thus provide a moment for the bulkhead 300. Because the stringer end fittings 316 are not providing a tension force, the stringer end fittings 316 do not have to necessarily align with one another on opposite sides of the bulkhead 300. Instead the stringer end fittings 316 may be offset from one another on opposite sides of the bulkhead. Additionally, fewer stringer end fittings 316 are required because of the enhanced efficiency of load transfer through the bulkhead joint assembly 312. Thus, cost savings, installation time reduction, and manufacturing time is minimized.

In one example the stringer end fittings 316 are secured to the aft section 304, forward section 308, and strap section 314 by fasteners. In other embodiments rivets, bolts, screws, bonds, welds, other fasteners, or the like are utilized. Each stringer end fitting 316 is shaped to matingly engage the corresponding stringer of an aft section 304 or forward section 308. In one example, each aft section 304 and forward section 308 are generally L-shaped to ensure that the surface of the stringer end fitting 316 secured to the corresponding strap section 314 is flat, or engaging continuously along the surface of the strap section 314. Meanwhile, the surface of the stringer end fitting 316 is secured to a corresponding stringer of the aft section 304 or forward section 308 and thus are considered aft stringer end fittings 316 or forward stringer end fittings 316. Additionally, in the embodiment where the stringer end fitting 316 is generally L-shaped, the section of the stringer end fitting 316 extending away from the secured section to provide additional structural support. In alternative embodiments, other sized and shaped stringer end fittings 316 are utilized including T-shaped stringer end fittings 316. In one embodiment the strap sections 314 are made from a composite fiber reinforced plastic (CFRP). By being made from CFRP, corrosion of the joint assembly 312 is minimized while manufacturing speed is increased because manufacturing steps including drilling, disassembly, and deburring of metal components, such as bathtub fittings, is eliminated.

The chords 318 in one exemplary embodiment are generally L-shaped with each chord including a horizontal section 332 and a vertical section 334 extending at an angle from the horizontal section 332. The angle may be obtuse, acute, or at a right angle. Alternatively, the chord 318 may be generally T-shaped. While illustrated as numerous chords 318, in another embodiment a one-piece chord 318 is provided. The horizontal section 332 engages and is secured to a strap section 314 within the forward section 308. The vertical section 334 meanwhile engages and is secured to the web body 302 of the bulkhead 300. In one example the chords 318 are secured to the other components by fasteners. In other embodiments rivets, bolts, screws, bonding, welds, or the like are utilized. In one example the chord 318 is secured to the strap section 314 and bulkhead 300 with fasteners on a single side of the bulkhead 300 to provide load transfer through the chord 318 on a single side of the bulkhead 300. In another example each chord 318 includes at least one mousehole opening 336 therein to facilitate visual inspection of a corresponding strap section 314. Specifically, each mousehole opening 336 is generally arcuate and extends from partially within the vertical section 334 to partially within and terminates in the horizontal section 332. Additionally, the mousehole opening 336 facilitates part production and assists installation by making the chords 318 more compliant. In one embodiment the chords 318 are made from a composite fiber reinforced plastic (CFRP). By being made from CFRP, corrosion of the joint assembly 312 is minimized while manufacturing speed is increased because manufacturing steps including drilling, disassembly, and deburring of metal components, such as bathtub fittings, is eliminated.

Thus, provided is a bulkhead joint assembly 312 that causes load from the bulkhead 300 to transfer to the chord 318 and through the corresponding strap section 314 to provide an efficient transfer of load. The chords 318 only need to be placed on one side (in this example the forward side 326) of the bulkhead 300 thus reducing the number of chords required. Additionally, because of the efficiency of the transfer of the loads, components of the bulkhead joint assembly 312 including the strap sections 314, stringer end fittings 316, chord sections 318, and T-shaped chord sections 320 can be made from a material that minimizes corrosion such as titanium or a composite such as CFRP instead of a more corrosive metal material such as aluminum. Consequently, cost is reduced, manufacturing processes are simplified, corrosion is minimized, and components are more pliable, facilitating installation. Additionally, splice parts are reduced, again simplifying the manufacturing process. Finally, the simplified design facilitates replacement and repair to the bulkhead 300 and other fuselage components because layers of components no longer need to be disassembled to access such components.

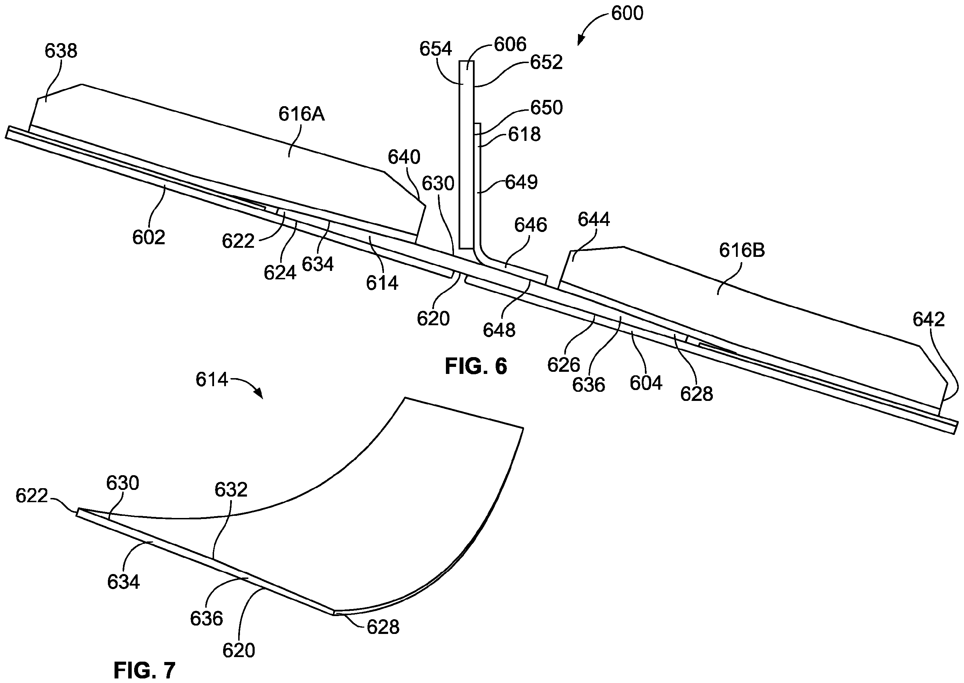

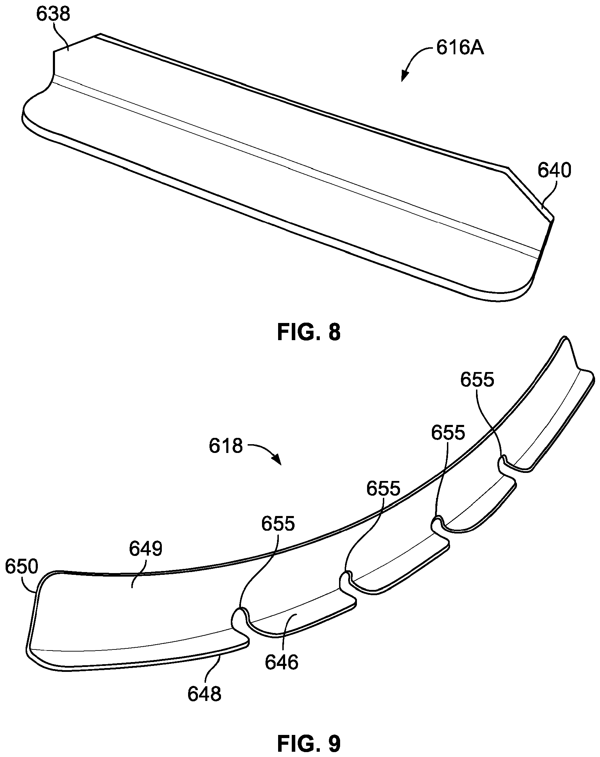

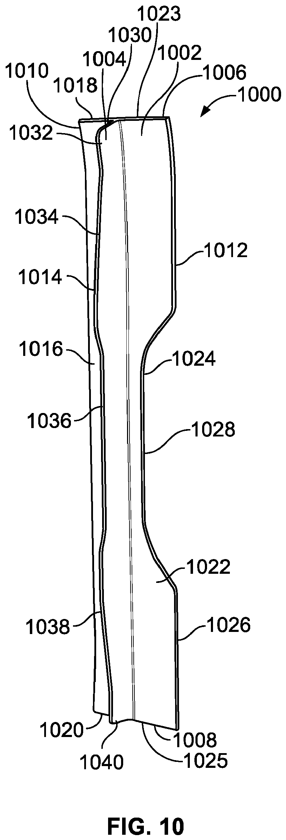

Figure 6 illustrates a partial side section view of a bulkhead joint assembly 600 that couples an aft section 602, a forward section 604, and a bulkhead 606. In one example, the bulkhead joint assembly 600 is the bulkhead joint assembly 312 of Figures 3-5. The bulkhead joint assembly 600 includes a strap section 614, a first stringer end fitting 616A, a second stringer end fitting 616B, a chord section 618, and a T-shaped chord (not shown in Figure 6). Figures 7-10 each illustrate an individual component of the bulkhead joint assembly 600 including the strap section 614 (Figure 7), the first stringer end fitting 616A (Figure 8), the chord section 618 (Figure 9), and a T-shaped chord section 1000 (Figure 10).

The strap section 614 is configured to mate with the aft section 602 and forward section 604. Specifically, the strap section 614 includes a bottom surface 620 that extends from a first end 622 along an interior, or interior surface 624 of the aft section 602, along an interior, or interior surface 626, or skin, of the forward section 604, and to a second end 628. A gap is formed between the first end 622 of each strap section 614 and adjacent stringers for tolerance during installation and as a drain path for liquid present in this area of the aircraft. Similarly, a gap is formed between the second end 628 and adjacent stringers again for tolerance during installation and as a drain path for liquid present in this area of the aircraft..

The strap section 614 also includes a top surface 630 that in one example tapers toward both the first end 622 and second end 628 (Figure 6). Alternatively, the top surface 630 in another exemplary embodiment extends parallel to the bottom surface 620 at the first end 622 until tapering toward the bottom surface at a tapering point 632 to form a constant gage section 634 and a tapered section 636 (Figure 7). In one example of the exemplary embodiment of Figure 7, the constant gage section 634 is approximately thirty-two (32) piles in thickness and the tapered section 636 extends from a thickness of thirty-two (32) piles at the tapering point 632 to sixteen (16) piles at the second end 628. Because of the constant gage section 634 and tapered section 636, the need for additional shims is greatly reduced and minimized. In this manner, a shimless strap section 614 is provided. The bottom surface 620 additionally extends arcuately (into the page of Figure 6) as illustrated in Figure 7. Thus, the bottom surface 620 matingly engages the arcuate interior surface 624, or skin, of the aft section 602 and the interior surface 626, or skin, of the forward section 604.

The first stringer end fitting 616A (Figure 8) engages and is secured to the aft section 602 at a first end 638 and matingly engages the strap section 614 at a second end 640. Similarly, the second stringer end fitting 616B engages and is secured to the forward section 604 at a first end 642 and matingly engages the strap section 614 at a second end 644. In this manner, the forces of the bulkhead joint assembly 600, including axial forces are provided an efficient load path for forward and aft load transfer between the first stringer end fitting 616A and strap section 614 and between the second stringer end fitting 616B and the strap section 614.

The chord 618 in an exemplary embodiment is generally L-shaped and includes a horizontal section 646 that has a bottom surface 648 that engages and extends along the top surface 630 of the strap section 614. Alternatively, the chord 618 may be generally T-shaped. The horizontal section 646 extends into a vertical section 649 that has a side surface 650 that engages and extends along a forward surface 652 of a web body 654 of the bulkhead 606. In one example the chord 618 is secured to the strap section 614 and bulkhead 606 with fasteners on a single side of the bulkhead 606 to provide load transfer through the chord 618 on a single side of the bulkhead 606. Disposed within the horizontal section 646 and vertical section 649 are mousehole openings 655. The mousehole openings 655 facilitate visual inspection of a corresponding strap section 614. Additionally, the mousehole openings 655 facilitate part production and assists installation by making the chords 618 more compliant.

As illustrated, the chord 618 of this embodiment is not at a right angle and instead has an obtuse angle. Specifically, because the bottom surface 648 of the horizontal section 646 engages and extends along the top surface 630 of the strap section 614, and because the side surface 650 of the vertical section 649 engages and extends along the forward surface 652 of the web body 654, the chord 618 translates load from the bulkhead 606 into a shear force between the chord 618 and strap section 614. Because the loads presented in the joint assembly 600 are efficiently transferred, the joint assembly 600 can be made of a CFRP, improving manufacturing efficiency and cost. In addition, this also reduces the amount of splice joints required, and reduces part number count. The joint assembly 600 also facilitates installation and replacement. Additionally, if supplemental support is desired, splice straps are easily added.

Figure 10 illustrates an exemplary T-shaped chord section 1000 of a bulkhead joint assembly that is a T-shaped chord section of the T-shaped chord sections 320 of bulkhead joint assembly 312 of Figures 3-5. The T-shaped chord section 1000 includes a main body 1002, a flange 1004 extending from the main body 1002, a top edge 1006, an opposite bottom edge 1008, an aft side edge 1010, a forward side edge 1012, and a flange edge 1014. In one example the flange 1004 extends at a right angle from the main body. In another embodiment, the flange 1004 extends to form an acute and obtuse angle with the main body. The T-shaped chord section 1000 within the fuselage spans from the aft section, under the web body of the bulk head to the forward section. The T-shaped chord section 1000 engages and is secured to the web body of the bulkhead, the aft section, and the forward section between a strap section and chord section at the keel of the bulkhead and a strap section and chord section at the crown of the bulkhead. In this manner the T-shaped chord provides a transition from the keel to the crown of a bulkhead joint. Specifically, at the keel end, the bottom edge 1008 butts against, or engages a keel chord and butts against or engages a keel strap section on in the forward section, and butts against, or engages a keel strap section on the aft section. Meanwhile, at the crown end, the top edge 1006 butts against, or engages a crown chord and butts against or engages a crown strap section on in the forward section, and butts against, or engages a crown strap section on the aft section. In one example the T-shaped chord 1000 is secured to the web body of the bulkhead, aft section, and forward section by fasteners. In other embodiments rivets, bolts, screws, bonds, welds, other fasteners, or the like are utilized. In one embodiment the T-shaped chords 1000 are made from titanium. In another embodiment the T-shaped chords 1000 are made in a monolithic process using a CFRP. In yet another embodiment the T-chord is made by combing a CFRP chord and a splice strap. By being made from CFRP, corrosion of joint assembly is minimized while manufacturing speed is increased because deburring of metal connectors, such as bathtub fittings, is eliminated.

The main body 1002 includes an aft section 1016 that extends from the aft side edge 1010 to the flange 1004. The aft section 1016 also extends within and engages an interior wall of an aft section. The aft side edge 1010 extends arcuately from an aft top edge section 1018 to an aft bottom edge section 1020. Specifically, the aft side edge 1010 tapers inwardly from the aft top edge section 1018 and tapers inwardly from the aft bottom edge section 1020.

The main body 1002 also includes a forward section 1022 that extends from the forward side edge 1012 to the flange 1004. The forward section 1022 also extends within and engages an interior wall of a forward section. The forward side edge 1012 extends from a forward top edge section 1023 to an interior arcuate section 1024 that tapers inwardly and back outwardly to a forward bottom edge section 1025. Specifically, the forward section 1022 thus has an outer width 1026 and an inner width 1028 where the inner width 1028 is less than the outer width 1026. The arcuate section 1024 facilitates part production and assists installation by making the T-shaped chord 1000 more compliant.

The flange 1004 includes a flange top surface section 1030 that tapers downwardly to matingly butt against a crown strap section. While in this and other exemplary embodiments illustrated the flange top surface section 1030 matingly butts against the crown strap section, in other embodiments a chord forms a lap splice with the T-shaped chord section 1000, thus overlapping the T-shaped chord section 1000 instead of butting against the crown strap section. The flange top surface section 1030 extends outwardly into a first flange arcuate section 1032 and then inwardly to a flange interior arcuate section 1034. The flange edge 1014 at the flange interior arcuate section 1036 extends outwardly to a second flange arcuate section 1038. The flange interior arcuate section 1036 facilitates part production and assists installation by making the T-shaped chord more compliant. The second flange arcuate section 1038 then tapers to a flange bottom surface section 1040 that tapers downwardly to matingly but against a keel strap section.

Thus, in one exemplary embodiment the T-shaped chord section 1000 extends between and butts against a keel strap section and a keel chord and a crown strap section and a crown chord. Alternatively, a lap spice joint, or joints are provided between the T-shaped chord section 1000 and the keel strap section and crown strap section such that the T-shaped chord section 1000 overlaps either or both of the keel strap section and/or crown strap section as desired. Therefore, the T-shaped chord is provided to efficiently distribute forces at the bulkhead joint. Additionally, the T-shaped chord section is formed to facilitate installation and accommodate corresponding pivot fittings secured to the web body of the bulk head.

Variations and modifications of the foregoing are possible.

It is understood that the embodiments disclosed and defined herein extend to all alternative combinations of two or more of the individual features mentioned or evident from the text and/or drawings. All of these different combinations constitute various alternative aspects of the present disclosure. The embodiments described herein explain the best modes known for practicing the disclosure and will enable others skilled in the art to utilize the disclosure.

To the extent used in the appended claims, the terms "including" and "in which" are used as the plain-English equivalents of the respective terms "comprising" and "wherein." Moreover, to the extent used in the following claims, the terms "first," "second," and "third," etc. are used merely as labels, and are not intended to impose numerical requirements on their objects.

Various features of the disclosure are set forth in the following claims.

## Claims

1. A bulkhead joint assembly (312, 600) for a bulkhead (104, 606) having a web body (122) that includes a forward side (124), an aft side (126), a crown periphery (128), first side periphery (130), second side periphery (132), and keel periphery (134), said assembly comprising:
a crown strap section (314, 614) at the crown periphery of the bulkhead configured to secure to an aft section (304, 602) of a fuselage (100) and a forward section (308, 604) of the fuselage (100) and extend past the bulkhead (104, 300, 606) of the fuselage (100);
a keel strap section (314, 614) at the keel periphery of the bulkhead configured to secure to the aft section (304, 602) of the fuselage (100) and the forward section (308, 604) of the fuselage (100) and extend past the bulkhead (104, 300, 606) of the fuselage (100);
a chord (318, 618) engaging and secured to the crown strap section (314, 614), wherein the chord (318, 618) is configured to extend along the crown periphery of the bulkhead (104, 300, 606) to transfer a load from the bulkhead (104, 300, 606) in shear between the chord (318, 618) and the crown strap section (314, 614);
a chord (318, 618) engaging and secured to the keel strap section (314, 614), wherein the chord (318, 618) is configured to extend along the keel periphery of the bulkhead (104, 300, 606) to transfer a load from the bulkhead (104, 300, 606) in shear between the chord (318, 618) and the keel strap section (314, 614); and
a T-shaped chord section (320, 1000) configured to engage and to be secured to the web body (122) of the bulkhead, to the aft section (304, 602) and to the forward section (308, 604) between the keel strap section (314, 614) and the chord (318, 618) at the keel periphery of the bulkhead and the crown strap section (314, 614) and the chord (318, 618) at the crown periphery of the bulkhead (104, 300, 606).

2. The bulkhead joint assembly (312, 600) of claim 1, further comprising:
an aft stringer end fitting (316, 616A) secured to the crown or keel strap section (314, 614) and extending to and configured to be secured to the aft section (304, 602);
a forward stringer end fitting (316, 616B) secured to said crown or keel strap section (314, 614) and extending to and configured to be secured to the forward section (308, 604).

3. The bulkhead joint assembly (312, 600) of claim 2, wherein the crown/keel strap sections (314, 614), the chords (318, 618), the aft stringer end fitting (316, 616A), and the forward stringer end fitting (316, 616B) are made of composite fiber reinforced plastic.

4. The bulkhead joint assembly (312, 600) of claim 1, 2, or 3, wherein the crown/keel strap sections (314, 614) include a constant gage section (634) and a tapered section (636).

5. The bulkhead joint assembly (312, 600) of any one of claims 1-4, wherein each chord (318, 618) includes a mousehole opening (336) that extends arcuately in a vertical section (334, 649) of the chord (318, 618).

6. The bulkhead joint assembly (312, 600) of any one of claims 1-5, wherein each chord (318, 618) includes a horizontal section (332, 646) that engages and extends along the crown/keel strap section (314, 614) and a vertical section (334, 649) that is configured to engage and extend along the bulkhead (104, 300, 606).

7. The bulkhead joint assembly (312, 600) of claim 6 wherein an obtuse angle is formed between the horizontal section (332, 646) of said each chord (318, 618) and the vertical section (334, 649) of said each chord (318, 618).

8. The bulkhead joint assembly (312, 600) of any one of claims 1-7, wherein the T-shaped chord section (320, 1000) butts against the keel strap section (314, 614) and the crown strap section (314, 614).

9. The bulkhead joint assembly (312, 600) of any one of claims 1-7, wherein the T-shaped chord section (320, 1000) overlaps with the keel strap section (314, 614) and the crown strap section (314, 614).

10. The bulkhead joint assembly (312, 600) of any one of claims 1-9, wherein the T-shaped chord section (320, 1000) includes a main body (1002) and a flange (1004) extending from the main body (1002).

11. The bulkhead joint assembly (312, 600) of claim 10, wherein the flange (1004) of the T-shaped chord section (320, 1000) includes a flange interior arcuate section (1024).

12. A fuselage (100) comprising:
an aft section (304, 602);
a forward section (308, 604) matingly receiving the aft section (304, 602) at a bulkhead joint;
a bulkhead (104, 300, 606) extending around an interior of the aft section (102, 304, 602) and an interior of the forward section (308, 604) adjacent the bulkhead joint, said bulkhead having a web body (122) that includes a forward side (124), an aft side (126), a crown periphery (128), first side periphery (130), second side periphery (132), and keel periphery (134); and
a bulkhead joint assembly (312, 600) according to claim 1 securing the aft section (102, 304, 602) to the forward section (112, 308, 604).

13. The fuselage (100) of claim 12, wherein the bulkhead joint assembly (312, 600) further comprises:
an aft stringer end fitting (316, 616A) secured to the crown or keel strap section (314, 614) and extending to and secured to the aft section (102, 304, 602);
a forward stringer end fitting (316, 616B) secured to said crown or keel strap section (314, 614) and extending to and secured to the forward section (112, 308, 604).

14. The fuselage (100) of claim 13, wherein the crown/keel strap sections (314, 614), the chords (318, 618), the aft stringer end fitting (316, 616A), and the forward stringer end fitting (316, 616B) are made of composite fiber reinforced plastic.

15. The fuselage (100) of claim 12, 13, or 14, wherein the T-shaped chord section (318, 618) butts against the keel strap section (314, 614) and the crown strap section (314, 614).

## Patentansprüche

1. Druckschottverbindungsanordnung (312, 600) für ein Druckschott (104, 606), das einen Gewebekörper (122) hat, der eine Vorderseite (124), eine Rückseite (126), einen Deckenrand (128), einen ersten Seitenrand (130), einen zweiten Seitenrand (132) und einen Kielrand (134) aufweist, wobei die Anordnung aufweist:
einen Deckengurtabschnitt (314, 614) an dem Deckenrand des Druckschotts, der konfiguriert ist, um an einem hinteren Abschnitt (304, 602) eines Rumpfs (100) und einem vorderen Abschnitt (308, 604) des Rumpfs (100) befestigt zu werden und sich über das Druckschott (104, 300, 606) des Rumpfs (100) hinaus zu erstrecken;
einen Kielgurtabschnitt (314, 614) an dem Kielrand des Druckschotts, der konfiguriert ist, um an dem hinteren Abschnitt (304, 602) des Rumpfs (100) und dem vorderen Abschnitt (308, 604) des Rumpfs (100) befestigt zu werden und sich über das Druckschott (104, 300, 606) des Rumpfs (100) hinaus zu erstrecken;
eine Sehne (318, 618), die an dem Deckengurtabschnitt (314, 614) im Eingriff und befestigt ist, wobei die Sehne (318, 618) konfiguriert ist, um sich entlang des Deckenrands des Druckschotts (104, 300, 606) zu erstrecken, um eine Last von dem Druckschott (104, 300, 606) in Scherung zwischen der Sehne (318, 618) und dem Deckengurtabschnitt (314, 614) zu übertragen;
eine Sehne (318, 618), die an dem Kielgurtabschnitt (314, 614) im Eingriff und befestigt ist, wobei die Sehne (318, 618) konfiguriert ist, um sich entlang des Kielrands des Druckschotts (104, 300, 606) zu erstrecken, um eine Last von dem Druckschott (104, 300, 606) in Scherung zwischen der Sehne (318, 618) und dem Kielgurtabschnitt (314, 614) zu übertragen; und
einen T-förmigen Sehnenabschnitt (320, 1000), der konfiguriert ist, um an dem Gewebe- und/oder Verstrebungskörper (122) des Druckschotts, an dem hinteren Abschnitt (304, 602) und an dem vorderen Abschnitt (308, 604) in Eingriff gebracht und befestigt zu werden und zwar zwischen dem Kielgurtabschnitt (314, 614) und der Sehne (318, 618) an dem Kielrand des Druckschotts und zwischen dem Deckengurtabschnitt (314, 614) und der Sehne (318, 618) an dem Deckenrand des Druckschotts (104, 300, 606).

2. Druckschottverbindungsanordnung (312, 600) nach Anspruch 1, ferner aufweisend:
eine hintere Stringerende-Armatur (316, 616A), die an dem Decken- oder dem Kielgurtabschnitt (314, 614) befestigt ist und sich zu dem hinteren Abschnitt (304, 602) erstreckt und konfiguriert ist, um an dem hinteren Abschnitt (304, 602) befestigt zu werden;
eine vordere Stringerende-Armatur (316, 616B), die an dem Decken- oder dem Kielgurtabschnitt (314, 614) befestigt ist und sich zu dem vorderen Abschnitt (308, 604) erstreckt und konfiguriert ist, um an dem vorderen Abschnitt (308, 604) befestigt zu werden.

3. Druckschottverbindungsanordnung (312, 600) nach Anspruch 2, wobei die Decken/Kiel-Gurtabschnitte (314, 614), die Sehnen (318, 618), die hintere Stringerende-Armatur (316, 616A) und die vordere Stringerende-Armatur (316, 616B) aus mit Verbundfaser verstärktem Kunststoff hergestellt sind.

4. Druckschottverbindungsanordnung (312, 600) nach Anspruch 1, 2 oder 3, wobei die Decken/Kiel-Gurtabschnitte (314, 614) einen konstanten Maßabschnitt (634) und einen sich verjüngenden Abschnitt (636) aufweisen.

5. Druckschottverbindungsanordnung (312, 600) nach einem der Ansprüche 1 bis 4, wobei jede Sehne (318, 618) eine Mauselochöffnung (336) aufweist, die sich in einem vertikalen Abschnitt (334, 649) der Sehne (318, 618) bogenförmig erstreckt.

6. Druckschottverbindungsanordnung (312, 600) nach einem der Ansprüche 1 bis 5, wobei jede Sehne (318, 618) aufweist: einen horizontalen Abschnitt (332, 646), der sich entlang des Decken/Kiel-Gurtabschnitts (314, 614) erstreckt und mit diesem im Eingriff ist, und einen vertikalen Abschnitt (334, 649), der konfiguriert ist, um sich entlang des Druckschotts (104, 300, 606) zu erstrecken und mit diesem im Eingriff zu sein.

7. Druckschottverbindungsanordnung (312, 600) nach Anspruch 6, wobei ein stumpfer Winkel zwischen dem horizontalen Abschnitt (332, 646) jeder Sehne (318, 618) und dem vertikalen Abschnitt (334, 649) jeder Sehne (318, 618) gebildet ist.

8. Druckschottverbindungsanordnung (312, 600) nach einem der Ansprüche 1 bis 7, wobei der T-förmige Sehnenabschnitt (320, 1000) an dem Kielgurtabschnitt (314, 614) und dem Deckengurtabschnitt (314, 614) stumpf anliegt.

9. Druckschottverbindungsanordnung (312, 600) nach einem der Ansprüche 1 bis 7, wobei der T-förmige Sehnenabschnitt (320, 1000) mit dem Kielgurtabschnitt (314, 614) und dem Deckengurtabschnitt (314, 614) überlappt.

10. Druckschottverbindungsanordnung (312, 600) nach einem der Ansprüche 1 bis 9, wobei der T-förmige Sehnenabschnitt (320, 1000) einen Hauptkörper (1002) und einen sich von dem Hauptkörper (1002) erstreckenden Flansch (1004) aufweist.

11. Druckschottverbindungsanordnung (312, 600) nach Anspruch 10, wobei der Flansch (1004) des T-förmigen Sehnenabschnitts (320, 1000) einen inneren bogenförmigen Flanschabschnitt (1024) aufweist.

12. Rumpf (100) aufweisend:
einen hinteren Abschnitt (304, 602);
einen vorderen Abschnitt (308, 604), der den hinteren Abschnitt (304, 602) an einer Druckschottverbindung paarend empfängt;
ein Druckschott (104, 300, 606), das sich um ein Inneres des hinteren Abschnitts (102, 304, 602) und ein Inneres des vorderen Abschnitts (308, 804) erstreckt, angrenzend an die Druckschottverbindung, wobei das Druckschott einen Gewebe- und/oder Verstrebungskörper (122) hat, der eine Vorderseite (124), eine Rückseite (126), einen Deckenrand (128), einen ersten Seitenrand (130), einen zweiten Seitenrand (132) und einen Kielrand (134) aufweist; und
eine Druckschottverbindungsanordnung (312, 600) nach Anspruch 1, die den hinteren Abschnitt (102, 304, 602) an dem vorderen Abschnitt (112, 308, 604) befestigt.

13. Rumpf (100) nach Anspruch 12, wobei die Druckschottverbindungsanordnung (312, 600) desweiteren aufweist:
eine hintere Stringerende-Armatur (316, 616A), die an dem Decken- oder Kielgurtabschnitt (314, 614) befestigt ist und sich zu dem hinteren Abschnitt (102, 304, 602) erstreckt und an dem hinteren Abschnitt (102, 304, 602) befestigt ist;
eine vordere Stringerende-Armatur (316, 616B), die an dem Decken- oder Kielgurtabschnitt (314, 614) befestigt ist und sich zu dem vorderen Abschnitt (112, 308, 604) erstreckt und an dem vorderen Abschnitt (112, 308, 604) befestigt ist.

14. Rumpf (100) nach Anspruch 13, wobei die Decken/Kiel-Gurtabschnitte (314, 614), die Sehnen (318, 618), die hintere Stringerende-Armatur (316, 616A) und die vordere Stringerende-Armatur (316, 616B) aus mit Verbundfaser verstärktem Kunststoff hergestellt sind.

15. Rumpf (100) nach Anspruch 12, 13 oder 14, wobei der T-förmige Sehnenabschnitt (318, 618) an dem Kielgurtabschnitt (314, 614) und dem Deckengurtabschnitt (314, 614) stumpf anliegt.

## Revendications

1. Ensemble de joint de cloison (312, 600) pour une cloison (104, 606) comportant un corps d'âme (122) qui inclut un côté avant (124), un côté arrière (126), une périphérie de sommet (128), une première périphérie latérale (130), une seconde périphérie latérale (132), et une périphérie de carène (134), ledit ensemble comprenant :
une partie en bande de sommet (314, 614) au niveau de la périphérie de sommet de la cloison configurée pour être fixée à une partie arrière (304, 602) d'un fuselage (100) et à une partie avant (308, 604) du fuselage (100) et s'étendre au-delà de la cloison (104, 300, 606) du fuselage (100) ;
une partie en bande de carène (314, 614) au niveau de la périphérie de carène de la cloison configurée pour être fixée à la partie arrière (304, 602) du fuselage (100) et à la partie avant (308, 604) du fuselage (100) et s'étendre au-delà de la cloison (104, 300, 606) du fuselage (100) ;
une corde (318, 618) s'engageant avec et étant fixée à la partie en bande de sommet (314, 614), la corde (318, 618) étant configurée pour s'étendre le long de la périphérie de sommet de la cloison (104, 300, 606) pour transférer une charge depuis la cloison (104, 300, 606) en cisaillement entre la corde (318, 618) et la partie en bande de sommet (314, 614) ;
une corde (318, 618) s'engageant avec et étant fixée à la partie en bande de carène (314, 614), la corde (318, 618) étant configurée pour s'étendre le long de la périphérie de carène de la cloison (104, 300, 606) pour transférer une charge depuis la cloison (104, 300, 606) en cisaillement entre la corde (318, 618) et la partie en bande de carène (314, 614) ; et
une partie de corde en forme de T (320, 1000) configurée pour s'engager avec et être fixée au corps d'âme (122) de la cloison, à la partie arrière (304, 602) et à la partie avant (308, 604) entre la partie en bande de carène (314, 614) et la corde (318, 618) au niveau de la périphérie de carène de la cloison et la partie en bande de sommet (314, 614) et la corde (318, 618) au niveau de la périphérie de sommet de la cloison (104, 300, 606).

2. Ensemble de joint de cloison (312, 600) selon la revendication 1, comprenant en outre :
un raccord d'extrémité de lisse arrière (316, 616A) fixé à la partie en bande de sommet ou de carène (314, 614) et s'étendant jusqu'à la partie arrière (304, 602) à laquelle il est configuré pour être fixé ;
un raccord d'extrémité de lisse avant (316, 616B) fixé à la partie en bande de sommet ou de carène (314, 614) et s'étendant jusqu'à la partie avant (308, 604) à laquelle il est configuré pour être fixé.

3. Ensemble de joint de cloison (312, 600) selon la revendication 2, dans lequel les parties en bande de sommet/carène (314, 614), les cordes (318, 618), le raccord d'extrémité de lisse arrière (316, 616A) et le raccord d'extrémité de lisse avant (316, 616B) sont constitués de plastique renforcé de fibres composites.

4. Ensemble de joint de cloison (312, 600) selon la revendication 1, 2 ou 3, dans lequel les parties en bande de sommet/carène (314, 614) incluent une partie de calibre constant (634) et une partie effilée (636).

5. Ensemble de joint de cloison (312, 600) selon l'une quelconque des revendications 1 à 4, dans lequel chaque corde (318, 618) inclut une ouverture de trou de souris (336) qui s'étend de manière arquée dans une partie verticale (334, 649) de la corde (318, 618).

6. Ensemble de joint de cloison (312, 600) selon l'une quelconque des revendications 1 à 5, dans lequel chaque corde (318, 618) inclut une partie horizontale (332, 646) qui s'engage avec et s'étend le long de la partie en bande de sommet/carène (314, 614) et une partie verticale (334, 649) qui est configurée pour s'engager avec et s'étendre le long de la cloison (104, 300, 606).

7. Ensemble de joint de cloison (312, 600) selon la revendication 6, dans lequel un angle obtus est formé entre la partie horizontale (332, 646) de chaque dite corde (318, 618) et la partie verticale (334, 649) de chaque dite corde (318, 618).

8. Ensemble de joint de cloison (312, 600) selon l'une quelconque des revendications 1 à 7, dans lequel la partie de corde en forme de T (320, 1000) vient en butée contre la partie en bande de carène (314, 614) et la partie en bande de sommet (314, 614).

9. Ensemble de joint de cloison (312, 600) selon l'une quelconque des revendications 1 à 7, dans lequel la partie de corde en forme de T (320, 1000) chevauche la partie en bande de carène (314, 614) et la partie en bande de sommet (314, 614).

10. Ensemble de joint de cloison (312, 600) selon l'une quelconque des revendications 1 à 9, dans lequel la partie de corde en forme de T (320, 1000) inclut un corps principal (1002) et une bride (1004) s'étendant depuis le corps principal (1002).

11. Ensemble de joint de cloison (312, 600) selon la revendication 10, dans lequel la bride (1004) de la partie de corde en forme de T (320, 1000) inclut une partie arquée d'intérieur de bride (1024).

12. Fuselage (100) comprenant :
une partie arrière (304, 602) ;
une partie avant (308, 604) recevant par accouplement la partie arrière (304, 602) au niveau d'un joint de cloison ;
une cloison (104, 300, 606) s'étendant autour d'un intérieur de la partie arrière (102, 304, 602) et d'un intérieur de la partie avant (308, 604) adjacent au joint de cloison, ladite cloison comportant un corps d'âme (122) qui inclut un côté avant (124), un côté arrière (126), une périphérie de sommet (128), une première périphérie latérale (130), une deuxième périphérie latérale (132), et une périphérie de carène (134) ; et
un ensemble de joint de cloison (312, 600) selon la revendication 1 fixant la partie arrière (102, 304, 602) à la partie avant (112, 308, 604).

13. Fuselage (100) selon la revendication 12, dans lequel l'ensemble de joint de cloison (312, 600) comprend en outre :
un raccord d'extrémité de lisse arrière (316, 616A) fixé à la partie en bande de sommet ou de carène (314, 614) et s'étendant jusqu'à la partie arrière (102, 304, 602) à laquelle il est configuré pour être fixé ;
un raccord d'extrémité de lisse avant (316, 616B) fixé à ladite partie en bande de sommet ou de carène (314, 614) et s'étendant jusqu'à la partie avant (112, 308, 604) à laquelle il est configuré pour être fixé.

14. Fuselage (100) selon la revendication 13, dans lequel les parties en bande de sommet/carène (314, 614), les cordes (318, 618), le raccord d'extrémité de lisse arrière (316, 616A) et le raccord d'extrémité de lisse avant (316, 616B) sont constitués de plastique renforcé de fibres composites.

15. Fuselage (100) selon la revendication 12, 13 ou 14, dans lequel la partie de corde en forme de T (318, 618) vient en butée contre la partie en bande de carène (314, 614) et la partie en bande de sommet (314, 614).
